# FASCICULE DE BREVET EUROPEEN

(11) **EP 3 149 300 B1**
(45) Date de publication et mention de la délivrance du brevet: **15.08.2018**
(21) Numéro de dépôt: 15723268.7
(22) Date de dépôt: 24.04.2015
(51) Int. Cl.: F01N 3/20, F01N 13/00, F01N 3/28, F01N 3/035

(54) **DISPOSITIF DE POST-TRAITEMENT DES GAZ D'ÉCHAPPEMENT D'UN MOTEUR A COMBUSTION**
ABGASNACHBEHANDLUNGSEINRICHTUNG FÜR EINE BRENNKRAFTMASCHINE
EXHAUST GAS AFTER-TREATMENT DEVICE FOR AN INTERNAL COMBUSTION ENGINE

(30) Priorité: 27.05.2014 FR 1454753
(43) Date de publication de la demande: 05.04.2017
(73) Titulaire: PSA Automobiles SA, 78300 Poissy (FR)
(72) Inventeur: MATTHESS, Nils, 92300 Levallois Perret (FR); GENIES, Jean Florent, 78100 St Germain en Laye (FR); BERTIN, Thierry, 92250 La Garenne Colombes (FR); LE TALLEC, Thomas, 92800 Puteaux (FR)
(74) Mandataire: Renous Chan, Véronique
(86) Numéro de dépôt international: PCT/FR2015/051118
(87) Numéro de publication internationale: WO 2015/181456

(56) Documents cités:
- WO-A1-2011/089330
- WO-A1-2012/123660
- FR-A1- 2 995 349
- US-A1- 2011 138 776

## Description

L'invention est relative à des moyens de traitement des polluants des gaz d'échappement des moteurs à combustion.

Les émissions polluantes des moteurs à combustion équipant les véhicules automobiles sont réglementées par des normes. Les polluants réglementés sont, selon la technologie de moteur à combustion considérée, le monoxyde de carbone (CO), les hydrocarbures imbrûlés (HC), les oxydes d'azotes (NOx, c'est-à-dire NO et NO₂₎ et les particules (PM), qui sont formés lors de la combustion du carburant dans la chambre de combustion puis émis à l'échappement.

Il est connu d'employer un certain nombre de moyens de dépollution dans la ligne d'échappement des moteurs à combustion pour en limiter les émissions de polluants réglementés. Un catalyseur d'oxydation permet le traitement du monoxyde de carbone, des hydrocarbures imbrûlés, et dans certaines conditions des oxydes d'azote ; un filtre à particules peut être employé pour le traitement des particules de suie.

On désigne de manière générale ce type de dispositif par le terme de dispositif de « post-traitement » des gaz d'échappement.

Pour satisfaire aux normes anti-pollution sur les émissions d'oxydes d'azote (NOx), un système spécifique de post-traitement peut être introduit dans la ligne d'échappement des véhicules, notamment des véhicules équipés de moteurs Diesel. Pour le traitement des oxydes d'azote (NOx), on connaît des technologies de réduction catalytique sélective, ou « SCR » pour « Selective Catalytic Réduction » en anglais, qui consistent à réduire les NOx par introduction d'un agent réducteur (ou d'un précurseur d'un tel agent réducteur) dans les gaz d'échappement par réactions catalysées. Il peut par exemple s'agir d'une solution d'urée, dont la décomposition va permettre l'obtention d'ammoniac qui servira d'agent réducteur, mais également d'un réducteur ou d'un précurseur d'un tel réducteur sous forme gazeuse. On parlera dans la suite du présent document d'une manière générale de « réducteur » pour désigner un agent réducteur ou un précurseur d'agent réducteur.

L'agent réducteur généré permet de réduire les oxydes d'azotes par réaction dans un catalyseur SCR, c'est-à-dire un substrat portant une imprégnation catalytique apte à favoriser la réduction des NOx par l'agent réducteur.

Les normes européennes, notamment, tendent à devenir de plus en plus sévères. Et les solutions pour réduire les émissions de polluants en sortie de ligne d'échappement pour respecter les normes actuelles se révèleront insuffisantes au vu des évolutions de normes prévues au-delà de 2016.

En effet, la première étape de la norme, Euro 6b (entrée en vigueur en septembre 2014) a conduit les constructeurs automobiles à choisir entre différentes options pour réduire plus spécifiquement l'émission des NOx : - la réduction des NOx « à la source », au niveau du fonctionnement même du moteur, via des technologies de type recyclage des gaz d'échappement dans le moteur, recyclage appelé aussi technologie EGR selon l'acronyme du terme anglais correspondant à « Exhaust Gas Recirculation » haute et basse pression, par exemple ; - la réduction des NOx au niveau de la ligne d'échappement via une technologie de traitement catalytique séquentiel appelée « piège à NOx » ; - la réduction des NOx au niveau de la ligne d'échappement également, via une technologie de traitement continu appelée « réduction catalytique sélective » telle que brièvement décrite plus haut (SCR) ; voire en cumulant plusieurs de ces solutions.

Si ces solutions permettent de satisfaire cette première étape dans l'évolution de la norme (Euro6b), elles ne sont pas forcément capables de satisfaire la seconde étape qui s'annonce encore plus sévère (Euro 6c, entrée en vigueur prévue en septembre 2017), avec des mesures de polluants sur un nouveau cycle de roulage dit « WLTC » (pour « Worldwide Harmonized Light vehicles Test Cycle » en anglais, soit cycle de test harmonisé pour véhicules légers en français), contenant plus de phases transitoires que le cycle d'homologation actuel (dit « MVEG » pour Motor Vehicle Emissions Group en anglais, soit groupe d'émissions pour véhicules motorisés en français), mais aussi des mesures hors cycle (appelé « RDE » pour Real Driving Emission ou émissions en conditions réelles de conduite) devraient être instaurées.

Pour répondre notamment aux risques d'émissions trop élevées de NOx hors cycle, différentes solutions technologiques et architectures peuvent être envisagées. Elles ont leurs avantages et leurs inconvénients. Mais la technologie de traitement des oxydes d'azote la plus efficace est la réduction catalytique sélective (SCR) car elle est efficace dans des plages de température et de débit de gaz plus étendues que celles d'un piège à NOx, l'autre solution de post-traitement.

Par ailleurs, s'ajoutent des contraintes d'implantation du dispositif de post-traitement. En effet, de façon générale, les systèmes de catalyseurs utilisés sont d'autant plus efficaces que la température des gaz d'échappement qui les traversent est élevée (jusqu'à un certain point) et stable. Ils s'amorceront alors d'autant plus vite après le démarrage du moteur quand la température des gaz d'échappement monte progressivement. On a donc intérêt à implanter les dispositifs de post-traitement au plus près du moteur, c'est-à-dire au plus près du collecteur des gaz d'échappement, sous capot, alors même que cet environnement est en général très encombré. Les dispositifs de post-traitement se doivent donc d'être aussi compacts que possible sans nuire à leurs performances.

Dans tout le présent texte, on comprend les termes « amont » et « aval » en fonction de la direction générale d'écoulement des gaz d'échappement dans la ligne d'échappement intégrant les organes de post-traitement, depuis le moteur jusqu'à la canule d'extrémité de la ligne d'échappement.

Il est, par exemple, connu de la demande de brevet WO 2011/089330 un dispositif de post-traitement regroupant dans une même enveloppe plusieurs organes qui vont être successivement traversés par les gaz d'échappement. Il y est proposé, notamment, une série d'organes comprenant d'amont en aval : - un catalyseur d'oxydation, - un injecteur d'agent réducteur de type urée, - un mélangeur dont le rôle est de mélanger intimement les gouttelettes d'urée injectées dans l'enveloppe traversée par les gaz, de façon à se décomposer en ammoniac de manière aussi homogène que possible sur toute la section droite de l'enveloppe, - un organe SCR, - un filtre à particules (appelé FAP par la suite). Il y est également proposé une alternative, consistant à remplacer l'organe SCR et le FAP, par un FAP qui est imprégné d'un catalyseur de réduction des NOx et qui remplit ainsi à la fois la fonction de filtre des suies et de réduction des NOx (appelé SCRF par la suite).

Cependant, un organe dédié SCR comme décrit dans ce document peut ne pas s'amorcer thermiquement suffisamment tôt pour des raisons de thermique non favorable, notamment dans des conditions de roulage urbain pendant lesquelles les températures dans la ligne d'échappement sont assez basses. Or, c'est justement pendant ce type de roulage urbain que les évolutions de la norme européenne (notamment) vont devenir contraignantes en termes de réduction des émissions de NOx.

Et la variante intégrant le catalyseur SCR dans le filtre à particules (SCRF) n'est pas non plus assez performante en conditions de roulage urbain, du fait de l'inertie thermique importante du substrat spécifique aux filtres à particules, même s'il est positionné de façon très proche du moteur. En effet, le substrat qui assure la filtration des particules et qui est imprégné du revêtement de catalyseur (revêtement d'imprégnation appelé en anglais « washcoat ») est une céramique poreuse qui consomme beaucoup de chaleur pour monter en température. L'amorçage de la phase SCR ne pourra ainsi se faire qu'au bout d'un certain temps, ce qui ne permettra pas à cette solution de respecter les futures évolutions de la norme.

L'invention a donc pour but de concevoir un post-traitement des gaz d'échappement qui remédie aux inconvénients précités. Elle a notamment pour but d'améliorer les dispositifs existants pour permettre de respecter des normes plus sévères en matière d'émissions de polluants, et plus particulièrement concernant les émissions de NOx dans des conditions de roulage non stabilisées du type roulage urbain et/ou dans une plage de températures élargie. Avantageusement, elle a aussi pour but d'obtenir un dispositif de post-traitement plus performant et qui reste, en outre, compact.

L'invention a tout d'abord pour objet un dispositif de post-traitement des gaz d'échappement d'un moteur à combustion qui comporte, d'amont en aval :
- un organe catalyseur d'oxydation DOC ;
- une embouchure d'un moyen d'introduction (moyen qui peut être un injecteur) de réducteur ou de précurseur d'un réducteur pour la réduction catalytique sélective des oxydes d'azote SCR ;
- un organe catalyseur de réduction catalytique sélective des oxydes d'azote NOx;
- un organe filtre à particules muni d'un revêtement catalyseur de réduction catalytique sélective des oxydes d'azote NOx, dit SCRF ;
- lesdits organes et embouchure étant regroupés dans une enveloppe unique ;
- ledit organe catalyseur de réduction catalytique sélective des oxydes d'azote étant d'une longueur au moins deux fois plus petite, notamment au moins 2,2 ou d'au moins 2,3 ou d'au moins 2,4 ou 2,5 jusqu'à 3 fois plus petite (au moins) que la longueur du filtre à particules.

Cette architecture de dispositif de post-traitement s'est avérée extrêmement favorable sur plusieurs aspects.

D'une part, on préserve la compacité de l'ensemble, qui est contenu dans une enveloppe unique, et qui pourra ainsi être avantageusement logé au plus près du collecteur des gaz d'échappement en sortie moteur sur la ligne d'échappement.

D'autre part, elle permet d'améliorer les performances du dispositif, notamment en ce qui concerne la réduction des NOx dans les conditions les moins favorables, à savoir, comme évoqué plus haut, dans des conditions de roulage urbain (où la température des gaz d'échappement reste inférieure à un roulage de type route ou autoroute); voire des conditions de type conduite dite agressive, avec de forts débits de gaz d'échappement par à-coups. Il a été également montré, subsidiairement, que cette architecture permettait de limiter au maximum les rejets d'ammoniac en bout de ligne d'échappement (ce qu'on désigne également en anglais sous le terme de « NH₃ slip », rejets d'ammoniac provenant de l'agent réducteur injecté en amont de l'organe porteur du catalyseur SCR mais n'ayant pas réagi).

Et ces résultats très intéressants ont été obtenus par la combinaison de deux organes SCR : l'un dédié à cette fonction, l'autre intégré dans le filtre à particules, avec un ratio entre les longueurs des deux organes très spécifique correspondant à un organe SCR bien plus petit que le filtre à particules. Ainsi, on « répartit » la fonction de réduction des NOx sur deux organes successifs, avec un organe SCR dédié qui est petit, et de fait très efficace car s'amorçant thermiquement nettement mieux, à une température seuil inférieure à la température d'amorçage du SCR contenu dans le filtre à particules (SCRF). On peut ainsi considérer que l'organe SCR assure la majorité de la réduction globale des NOx du dispositif, notamment dans des conditions de roulage défavorables (température faible des gaz, débit fort des gaz), et que le SCRF voit sa contribution à la réduction des NOx s'élever une fois ces conditions de roulage défavorables quittées ou une fois les conditions de roulage stabilisées. En évitant d'utiliser un SCRF seul, non seulement le dispositif de l'invention s'amorce mieux thermiquement, mais il atténue l'impact d'une éventuelle dégradation du revêtement catalytique du FAP en cas d'une régénération qui ferait atteindre dans le FAP des températures excessives (plus de 1000°C, pour donner un ordre de grandeur).

Le dispositif selon l'invention va donc traiter les polluants gazeux et particulaires au fur et à mesure qu'ils traversent les organes de dépollution : ils pénètrent donc d'abord dans la première « brique » constituée du catalyseur d'oxydation, où le CO et les HC sont oxydés en eau (H₂O) et en dioxyde de carbone (CO₂).

Sortent de cette première brique DOC, les produits de l'oxydation du CO et des HC à savoir H₂O et CO₂, ainsi que les oxydes d'azote et les particules. Ces composés cheminent ensuite à travers la brique de catalyseur SCR (très courte/petite comme détaillée plus loin), qui réduit les NOx en azote (N₂) suivant différentes réactions qui seront détaillées plus loin.

Restent en sortie du catalyseur SCR des NOx résiduels, l'excès de l'ammoniac (NH₃) provenant du catalyseur (explicité ultérieurement) et des particules. Ces composés rentrent dans la brique SCRF, qui va terminer la réduction des NOx par NH₃ et éliminer les particules en les stockant avant de les brûler lors des régénérations.

De préférence, l'organe catalyseur de réduction catalytique sélective des oxydes d'azote présente une longueur d'au plus 80 mm, notamment d'au plus 76 mm, de préférence comprise entre 45 et 55 mm, par exemple d'environ 50 mm. Il s'agit donc vraiment d'un organe SCR très petit, qu'on peut désigner sous le terme de « tranche » SCR, qui s'est avéré remplir parfaitement son rôle alors qu'on aurait pu craindre qu'une si faible longueur/épaisseur le rendrait finalement peu performant (notamment du fait d'un temps de contact raccourci entre le catalyseur et les gaz d'échappement).

De préférence, la longueur de l'organe SCRF est d'au moins 10 cm, notamment comprise entre 10 et 15 cm, notamment d'environ 12 cm.

De préférence, la longueur totale de l'organe catalyseur de réduction catalytique sélective des oxydes d'azote et du filtre à particules, y compris l'espace éventuel entre eux, est d'au plus 200 mm, notamment d'au plus 190 mm, de préférence compris entre 170 et 180 mm L'invention maintient donc un encombrement modéré par rapport à une solution utilisant seulement un organe SCRF : elle ne vient pas rallonger notablement le dispositif de post-traitement, et préserve donc la compacité de l'ensemble.

De préférence, la longueur totale entre l'entrée de l'organe catalyseur d'oxydation et la sortie du filtre à particules est d'au plus 450 mm, notamment d'au plus 400 mm, de préférence comprise entre 280 et 380 mm.

Avantageusement, l'organe catalyseur d'oxydation comprend un matériau adsorbeur d'oxydes d'azote, appelé aussi PNA pour l'expression anglaise « Passive NOx Adsorber ».

Le rôle d'un matériau de type PNA est de pouvoir stocker lors des phases froides les oxydes d'azote émis par le moteur, tant que les organes catalysant la réduction des NOx (l'organe SCR et le filtre à particules avec revêtement catalytique SCRF) ne sont pas encore fonctionnels. En effet, il faut attendre 180 à 200°C pour pouvoir injecter le réducteur (urée) dans la ligne d'échappement et former l'ammoniac qui convertira ensuite les NOx. Avec du NH₃ « pré-stocké » dans le revêtement SCR, la conversion des NOx peut s'opérer quelques dizaines de degrés avant (aux environs de 140°C). Le PNA fonctionne en stockant les NOx « à froid » (grâce, notamment, à l'ajout, dans l'imprégnation « classique » d'un catalyseur d'oxydation, d'oxydes simples ou mixtes à caractère basique tels que, par exemple, les oxydes de cérium ou de baryum) avant de les restituer à plus haute température quand la SCR est pleinement opérationnelle (entre 200 et 300°C). Pour assurer un fonctionnement correct du PNA, on prévoit des phases de purges pour nettoyer sa surface qui s'est sulfatée au fur et à mesure du temps, de façon connue.

De préférence, l'organe catalyseur d'oxydation présente un catalyseur dont la quantité de métaux nobles est ajustée de façon à obtenir en sortie de l'organe des gaz d'échappement dont le ratio NO₂/NOx est égal ou voisin de 0,5 (on comprend par « voisin » une variation de par exemple +/- 15% autour de cette valeur).

Il a en effet été observé que, notamment quand le matériau du revêtement SCR (de l'organe SCR et/ou du filtre à particules SCRF) était choisi à base de zéolithes échangées au fer, on maximisait son efficacité en ménageant un ratio NO₂/NOx proche de 0,5 en entrée de l'organe SCR. L'organe avec des zéolithes échangées au fer fonctionne mieux à basse température qu'avec des zéolithes échangées au cuivre, et aussi bien à plus haute température.

Ce ratio peut être ajusté autour de cette valeur en ajustant la composition du catalyseur d'oxydation. La formulation de ce type de catalyseur contient généralement majoritairement de l'alumine Al₂O₃ dopée, des zéolithes de type aluminosilicates hydratés de métaux (connues également sous l'abréviation ZSM5) et non échangées afin de piéger les HC à froid, et des métaux précieux comme le Platine (Pt) et le Palladium (Pd), avec un ratio défini. En effet, en fonction de ce ratio Pt/Pd, le catalyseur d'oxydation sera plus ou moins apte à oxyder le monoxyde de carbone (CO) et les hydrocarbures imbrûlés (HC) : Plus le catalyseur contient de Platine plus sa capacité à oxyder NO en NO₂ sera grande. A noter qu'en sortie moteur, et donc à l'entrée de l'organe catalyseur d'oxydation, les émissions de NOx sont majoritairement composées de NO (>90%). Le catalyseur d'oxydation va donc oxyder efficacement NO en NO₂ pour ajuster le ratio NO₂/NOx à la valeur voulue.

De préférence, le catalyseur de l'organe catalyseur de réduction catalytique sélective est à base de zéolithe(s) échangée(s) au fer.

En effet, les revêtements d'imprégnation à base de zéolithes échangées au Fer (Fe) présentent un amorçage à plus basse température que ceux à base de zéolithes échangées au Cuivre (Cu), dès lors que le ratio NO₂/NOx est proche de 0,5. Quand cette condition est satisfaite, un revêtement à base de zéolithes échangées au Fer permet de convertir les NOx dès 150°C.

De préférence, le catalyseur du filtre à particules est à base de zéolithe(s) échangée(s) au cuivre.

En effet, cette nature de catalyseur est particulièrement adaptée pour imprégner un filtre à particules : - il présente une meilleure résistance thermique qu'un catalyseur à base de zéolithes échangées au Fer (il doit en effet subir sans dégradations d'éventuelles régénérations périodiques du filtre à très haute température), - la combustion des suies par NO₂ à des températures proches de 250°C à 350°C tend àréduire le ratio NO₂/NOx, les formulations de base de zéolithes échangées au Cuivre (Cu) étant également mieux adaptés que celles échangées au fer, -- il présente aussi une capacité de stockage de NH₃ plus élevée. Cette dernière caractéristique est particulièrement intéressante, car le faible volume (la faible longueur pour une section inchangée) de l'organe SCR peut être à l'origine de fuites de NH₃. Il est donc très utile que ces fuites d'ammoniac puissent être « captées » correctement dans la brique SCRF en aval de l'organe SCR.

A noter que les zéolithes échangées au Cuivre proposées pour le SCRF et/ou échangées au fer pour le catalyseur de l'organe catalyseur de réduction catalytique SCR sont par exemple à base de zéolithes du type chabazite, ferriérite ou aluminosilicates hydratés (ZMS5), et peuvent contenir également au moins un des oxydes suivants : oxyde de cérium (Ce), de zirconium (Zr), ou encore au moins un des métaux suivants : du niobium (Nb), du tungstène (W), du titane (Ti).

Selon un mode de réalisation, le support de l'organe catalyseur d'oxydation et/ou celui de l'organe catalyseur de réduction catalytique sélective est métallique, et optionnellement équipé(s) de moyens chauffants, par exemple de type résistances électriques. On réduit ainsi leurs durées de montée en température, et donc le temps à partir duquel ils s'amorcent.

Alternativement, on peut utiliser pour l'un et/ou l'autre de ces organes un matériau de type céramique comme la cordiérite.

Le support du filtre à particules SCRF peut être, par exemple, en carbure de silicium (SiC), en cordiérite ou en titanate d'aluminium.

Avantageusement, le dispositif de post-traitement selon l'invention comprend également un organe mélangeur des gaz d'échappement et du réducteur et/ou du précurseur du réducteur entre l'embouchure du moyen d'introduction de réducteur et/ou de précurseur d'un réducteur pour la réduction catalytique sélective des oxydes d'azote SCR et l'organe catalyseur de réduction catalytique sélective des oxydes d'azote.

Ce mélangeur a pour fonction de mélanger aussi bien que possible les gaz d'échappement avec le réducteur ou le précurseur de réducteur, cela étant notamment très utile quand le précurseur est de type liquide, comme de l'urée en phase aqueuse.

L'invention s'applique également à l'injection directe du gaz réducteur, comme de l'ammoniac, qui vient alimenter la ligne d'échappement à partir d'une ou plusieurs cartouches de sel (notamment de type SrCl₂) apte à adsorber l'ammoniac et à le relarguer par activation thermique, de façon connue (technologie appelée communément SCR « solide »), et, dans ce cas-là, le mélangeur est moins nécessaire.

De préférence, le mélangeur est d'un type présentant une longueur de parcours pour des gaz le traversant au moins deux fois supérieure à la longueur qu'il occupe longitudinalement dans l'enveloppe. Le but du mélangeur est d'homogénéiser le mélange entre les gaz d'échappement et le réducteur, et, si l'on introduit un précurseur d'un agent réducteur, de favoriser la décomposition du précurseur de réducteur en agent réducteur. L'emploi d'un mélangeur imposant au gaz d'échappement un parcours relativement long comparativement à la longueur du mélangeur, par exemple d'un type imposant au gaz un cheminement sensiblement hélicoïdal avec impacteur, est particulièrement adapté à l'invention. Il permet, par l'obtention d'une distance de parcours des gaz d'échappement supérieure à ses propres dimensions, l'emploi dans un dispositif compact d'une solution à base d'urée en tant que précurseur d'ammoniac, alors même que la thermolyse de l'urée dans les gaz d'échappement nécessite un temps non négligeable. Le mélangeur peut être aussi, par exemple, un mélangeur en T utilisant la recirculation des gaz aval catalyseur d'oxydation dans une double enveloppe autour du catalyseur d'oxydation avec une injection sur la face de sortie du catalyseur d'oxydation.

De préférence, le dispositif de post-traitement selon l'invention comprend un capteur d'oxydes d'azote en amont de l'organe catalyseur d'oxydation et un autre en aval du filtre à particules, de préférence hors de l'enveloppe unique. Le capteur « amont » peut être remplacé par une modélisation le cas échéant.

De préférence, l'enveloppe unique est sensiblement en forme de cylindre muni d'un divergent d'entrée et d'un convergent de sortie (en forme de tronçons de cône), d'une longueur totale d'au plus 450 mm, notamment d'au plus 400 mm, de préférence comprise entre 280 et 380 mm, et présente donc une compacité tout-à-fait compatible avec une implantation dans un sous-capot moteur d'un véhicule automobile.

De préférence, le moyen d'introduction de l'agent réducteur est un injecteur du type à actionneur par solénoïde ou piézoélectrique ou mécanique ou hydropneumatique.

Le conduit entre le collecteur d'échappement et le dispositif selon l'invention peut en outre comporter une ou plusieurs turbines de turbocompresseur dans le cadre d'un moteur suralimenté, et, en particulier, le dispositif selon l'invention peut être raccordé directement au carter d'un turbocompresseur, à la sortie d'une turbine.

L'invention a également pour objet la ligne d'échappement d'un moteur à combustion intégrant le dispositif de post-traitement précédemment décrit.

L'invention porte également sur un véhicule doté d'un compartiment moteur, tel que le moteur et le dispositif de post-traitement équipant sa ligne d'échappement sont contenus dans ledit compartiment moteur.

L'invention est décrite plus en détail ci-après en référence aux figures relatives à un mode de réalisation non limitatif se rapportant à un dispositif de post-traitement des gaz d'échappement d'un moteur diesel :
- la figure 1 représente schématiquement un moteur et sa ligne d'échappement d'un véhicule automobile comportant le dispositif de post-traitement selon un exemple 1 de l'invention ;
- la figure 2 présente un moteur et sa ligne d'échappement comportant un dispositif de post-traitement à titre d'exemple 2 comparatif ;
- la figure 3 présente un graphe comparant les températures en amont des organes de réduction catalytique sélective SCR de l'exemple 1 selon l'invention et de l'exemple 2 comparatif ;
- la figure 4 représente un graphe comparant les émissions de NOx en bout de ligne d'échappement avec le dispositif de post-traitement selon l'exemple 1 de l'invention et le dispositif de post-traitement selon l'exemple 2 comparatif ;
- la figure 5 représente un comparatif entre deux revêtements d'imprégnation SCR utilisés dans le dispositif de post-traitement selon l'exemple 1 de l'invention ;
- la figure 6 représente un schéma illustrant les évolutions comparées d'émissions de CO₂ et de NOx d'un moteur à la source.

Les références reprises d'une figure à l'autre désignent des mêmes composants, et les différents composants représentés ne sont pas nécessairement à l'échelle.

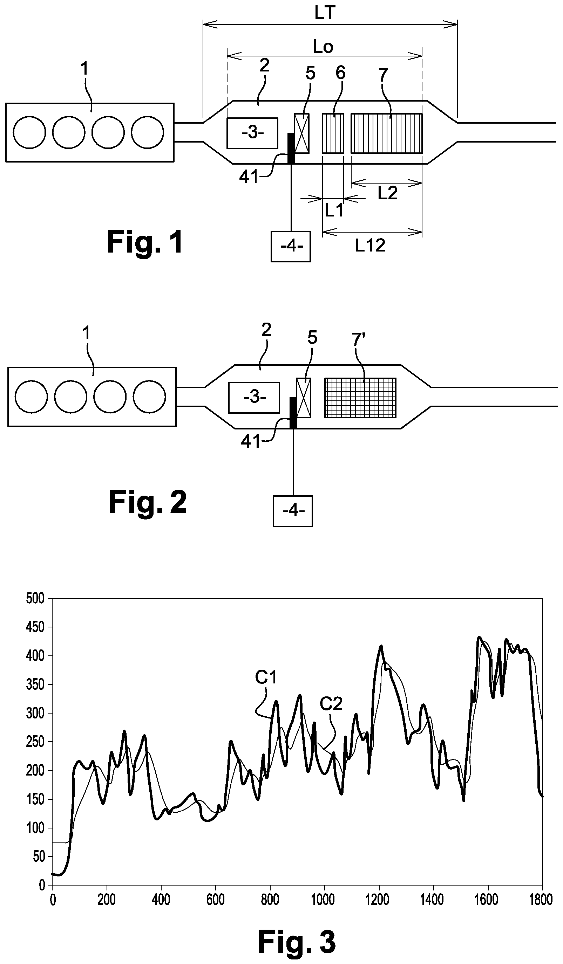

Dans l'invention, et tel que représenté sur la figure 1, on propose un dispositif de traitement des gaz d'échappement d'un moteur 1. Ce dispositif est intégré à la ligne d'échappement raccordée au collecteur (non représenté) des gaz d'échappement du moteur 1. Il comporte, dans une même enveloppe 2 (que l'on peut également désigner par le terme anglophone de « canning ») et, selon le sens d'écoulement des gaz d'échappement (d'amont en aval donc) un organe catalyseur d'oxydation 3, une embouchure 41 d'un moyen d'introduction 4 de réducteur (ou d'un précurseur d'agent réducteur), un mélangeur 5, un organe catalyseur SCR 6 (catalyseur de réduction catalytique sélective des oxydes d'azote), et un filtre à particules SCRF muni d'un revêtement d'imprégnation SCR 7. L'enveloppe 2 est située au plus près du collecteur des gaz d'échappement, notamment à environ 35 cm de sa sortie (par exemple d'au plus 50 cm de sa sortie). Elle est disposée, dans le véhicule automobile, dans l'espace sous-capot accueillant le moteur 1.

Les données dimensionnelles/géométriques sont les suivantes : L'enveloppe 2 est cylindrique et permet de loger les différents organes 3, 6 et 7, également de formes extérieures sensiblement cylindriques et de sections d'environ 0,016 m² de surface frontale. Les extrémités de l'enveloppe 2 sont en forme de tronçons de cône, afin d'en permettre le raccordement au reste de la ligne d'échappement de section nettement plus petite. La longueur L1 de l'organe SCR 6 est entre 5 et 7,5 cm, par exemple de 6 cm. La longueur L2 du filtre à particules 7 est compris entre 4 et 6 pouces, soit entre 10,16 et 15,24 cm, par exemple ici de 5 pouces, soit 12,7 cm.

La longueur L12 mesurée depuis la face amont de l'organe SCR 6 jusqu'à la face aval du filtre à particules 7 est, sachant qu'ils sont séparés d'environ 8 mm.

La longueur L3 de l'organe catalyseur d'oxydation est d'environ 70 mm.

La longueur L0 depuis la face amont du catalyseur d'oxydation 3 jusqu'à la face aval du filtre à particules 7 est entre 28 et 38 cm. Cette longueur correspond substantiellement à la longueur de la portion cylindrique de l'enveloppe 2. La longueur totale LT de l'enveloppe 2, incluant les deux cônes de raccordement est donc un peu supérieure.

La première « brique » de ce dispositif de post-traitement est le catalyseur d'oxydation 3, qui oxyde les espèces réductrices que sont le monoxyde de carbone (CO) et les hydrocarbures imbrûlés (HC). Les réactions qu'il favorise sont les suivantes :

| | |
|---|---|
| CO + ½ O₂ → CO₂ | (R1) Réaction d'oxydation du monoxyde de carbone |
| CₓH_{y} + (x+y/4) O₂ → x CO₂ + (y/2) H₂O | (R2) Réaction d'oxydation des hydrocarbures imbrûlés |

Il est constitué d'un support en nid d'abeille de type cordiérite sur lequel est déposée une phase active catalytique (« washcoat »). Cette phase comporte des oxydes tels que l'alumine dopée par différents stabilisants (lanthane, cérium, zirconium, titane, silicium, etc...). Sur ces oxydes, des métaux précieux (platine, palladium) sont déposés afin de catalyser les réactions d'oxydation à basse température. Des composés acides tels que des zéolithes sont aussi ajoutés. Leur aptitude au stockage des hydrocarbures à basse température et leur déstockage à haute température permet d'améliorer le traitement des HC lors des phases froides. On peut ajouter à ces fonctions (oxydation du monoxyde de carbone et des hydrocarbures imbrûlés et stockage de ces derniers à basse température) une fonction de stockage des oxydes d'azote, NOx également à basse température. Cette fonction de stockage est assurée par l'introduction de matériaux de type oxydes simples ou mixtes à caractère basique tels que par exemple, les oxydes de cérium ou de baryum entre autres.

On ne décrit pas en détails ici l'injecteur 4 d'urée, ni le mélangeur 5 (appelé aussi boîte de mélange), déjà décrits et connus, notamment de la demande de brevet WO 2011/089330 précitée. On rappelle juste que la boîte de mélange 5 alimentée par un injecteur 4, lui-même alimenté par un module jauge-pompe qui puise de l'urée en solution aqueuse dans un réservoir d'environ 20 litres (il peut en contenir moins car le volume d'urée embarquée dépend de la stratégie de consommation adoptée), assure un mélange entre les gouttes d'urée et les gaz d'échappement suffisant pour que la réaction (R3) de thermolyse se fasse totalement et que la réaction (R4) d'hydrolyse se fasse en partie avant d'être « terminée » sur l'organe SCR 6. Les réactions (R3) et (R4) sont explicitées plus loin.

L'organe SCR 6 et le filtre à particules SCRF 7 traitent les oxydes d'azote. Le principe de la réduction de ces NOx par SCR (que ce soit par l'organe 6 dédié ou par le revêtement du filtre à particules 7) peut se décomposer en deux grandes étapes :

### 1 > Formation du réducteur (NH₃) à partir d'Adblue ® qui est un mélange d'urée à 32,5% et d'eau

| | |
|---|---|
| (NH₂)₂CO → NH₃ + HNCO | (R3) thermolyse de l'urée |
| HNCO + H₂O → NH₃ + CO₂ | (R4) hydrolyse de l'acide isocyanique |

La décomposition de l'urée, injectée par l'injecteur 4 dans la boîte de mélange 5, se fait en deux étapes : une première appelée « thermolyse » qui forme une molécule de NH₃ et une molécule d'acide isocyanique (HNCO) et une seconde qui forme la seconde molécule de NH₃ à partir de l'hydrolyse de l'acide isocyanique. Ces deux étapes, et surtout la première, nécessitent des températures d'au moins 180 à 200°C, d'où l'intérêt que l'injecteur et la boîte de mélange gaz-liquide (urée) soient proche de la sortie du moteur 1. Cette étape permet de former le réducteur indispensable au fonctionnement de la réduction SCR.

### 2 > Réduction catalytique sélective des NOx par NH₃ par les revêtements SCR des organes 6 et 7:

| | | |
|---|---|---|
| 4 NO + O₂ + 4 NH₃ | → 4 N₂ + 6 H₂O | (R5) SCR standard |
| NO + NO₂ + 2 NH₃ | → 2 N₂ + 3 H₂O | (R6) SCR à cinétique rapide |
| 6 NO₂ + 8 NH₃ | → 7 N₂ + 12 H₂O | (R7) SCR basse température |

Plusieurs réactions peuvent avoir lieu (R5 à R7), mais la conversion optimale et recherchée des NOx est obtenue grâce à la réaction (R6) dont la cinétique est la plus rapide mais dont la stoechiométrie impose un ratio NO₂/NOx proche de 0,5, surtout aux basses températures (c'est-à-dire d'au plus 250°C).

Le catalyseur de l'organe SCR 6 est à base de zéolithes échangées au fer, comme les zéolithes β, fer--ferriérite, ZSM5, et le catalyseur SCR du filtre à particules 7 est à base de zéolithes au cuivre, comme chabazite, β, fer ferriérite, ZSM5, Comme déjà mentionné plus haut, c'est le meilleur choix, notamment pour que le catalyseur SCR 6 s'amorce le plus rapidement, à « basse » température quand le ratio NO₂/NOx des gaz d'échappement est proche de 0,5 en entrée de l'organe SCR 6, et pour que le catalyseur du filtre à particules reste efficace même à très haute température (qu'il résiste aux régénérations du filtre notamment). Le support poreux de l'organe SCR 6 est en cordiérite, tandis que le support poreux du filtre 7 est plutôt en carbure de silicium SiC.

La figure 2 représente un exemple comparatif 2 d'un dispositif de post-traitement. Toutes choses égales par ailleurs, l'organe SCR 6 a été supprimé, et le filtre à particules SCRF 7' a été rallongé de la longueur de l'organe SCR 6.

La figure 3 permet de comparer les températures mesurées en amont de la brique SCR 6 de l'exemple 1 et en amont du filtre SCRF 7 de l'exemple 2 comparatif. Le graphe indique en abscisse le temps en secondes, et en ordonnée la température mesurée en °C. Les mesures ont été faites avec un moteur dont la ligne d'échappement est équipée de l'un puis de l'autre des dispositifs de post-traitement décrits plus haut, le moteur fonctionnant en simulant un cycle de roulage WLTC. La courbe C1 se rapporte à l'exemple 1, et la courbe C2 à l'exemple 2. On observe que la courbe C1 est globalement au-dessus de la courbe C2, tout particulièrement dans les 400 premières secondes du cycle. On obtient donc avec l'architecture de l'exemple 1 selon l'invention des conditions thermiques plus favorables, ce qui se traduit par une plus grande efficacité dans le traitement des NOx : on a mesuré en sortie de ligne d'échappement le niveau de NOx exprimé en gramme par kilomètre sur un cycle WLTC en bout de ligne d'échappement pour chacun des deux exemples, ce qui a donné les résultats suivants :
- pour l'exemple 1 : niveau de 0,040 g/km
- pour l'exemple 2 comparatif : niveau de 0,173 g/km

On obtient donc avec l'invention une réduction très significative des rejets de NOx à l'atmosphère, tout en préservant la compacité de l'ensemble du dispositif de post-traitement.

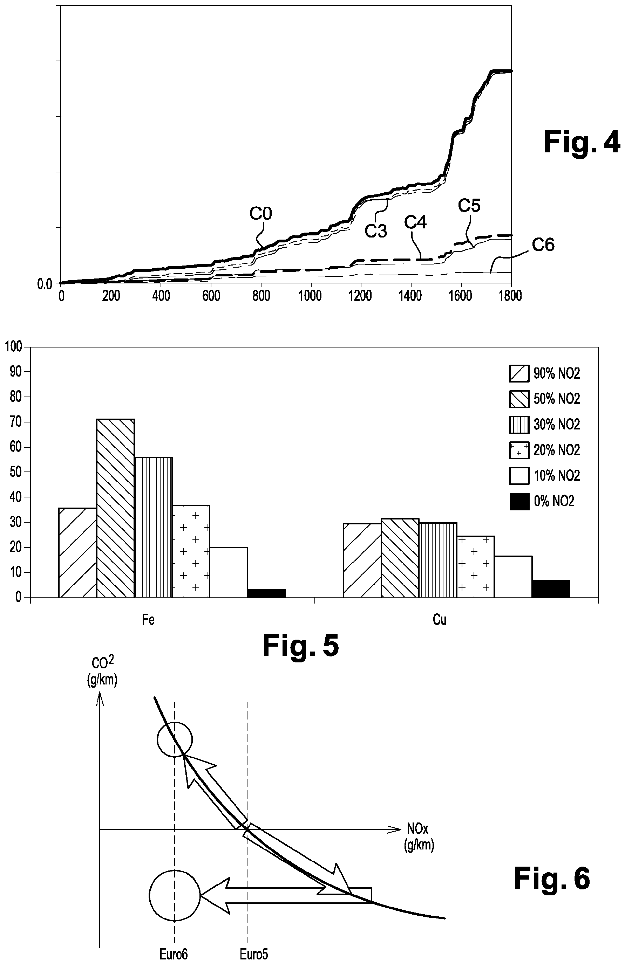

La figure 4 compare les niveaux de NOx des gaz d'échappement à différents stades pour l'exemple 1 et l'exemple 2. En abscisse est représenté le temps en secondes, en ordonnée est représenté la quantité de NOx contenue dans les gaz, en cumulé dans le temps. La courbe C0 représente la quantité de NOx en sortie moteur, la courbe C3 en sortie du catalyseur d'oxydation 3, la courbe C4 représente la quantité de NOx à la sortie de l'organe SCR de l'exemple 1 selon l'invention, la courbe C5 représente la quantité de NOx en bout de ligne d'échappement avec le dispositif de post traitement de l'exemple 2 comparatif, et la courbe C6 représente la quantité de NOx en bout de ligne d'échappement avec le dispositif de post-traitement selon l'exemple 1 de l'invention. La comparaison de ces différentes courbes confirme la meilleure efficacité dans la réduction des NOx de l'exemple de l'invention. Comparer les courbes C5 et C6 permet de souligner la complémentarité de l'organe SCR 6 et de l'organe SCRF 7, dont la combinaison permet d'atteindre en bout de ligne un niveau de NOx extrêmement faible: en taux cumulé à 1800 secondes, on voit le niveau de NOx avec l'invention (C6) a été diminué d'un facteur 3 au moins par rapport à celui obtenu avec l'exemple comparatif (C5). Comparer les courbes C4 et C5 permet également de souligner que l'organe SCR 6 selon l'invention, bien que de très faible longueur, a une capacité de réduction des NOx proche de celle du SCRF 7' de l'exemple comparatif, qui est nettement plus long, ce qui est particulièrement intéressant.

Mais le filtre à particules SCRF 7 située en aval (environ 8 millimètres derrière) joue aussi un rôle important, puisque cette brique assure l'élimination des particules et réalise le traitement des NOx qui n'auraient pas été réduits dans l'organe SCR 6, lors des fortes charges moteur, par exemple.

En aval de l'enveloppe 2 est positionné un capteur NOx (non représenté aux figures) capable de mesurer indirectement les émissions de NH₃. Le système est donc en outre « bouclé » pour éviter également tout risque de fuite de NH₃ en sortie de ligne d'échappement. En effet, si le capteur de NOx mesure de l'ammoniac en sortie du système de dépollution, l'injection d'urée est rapidement réduite et les fuites de NH₃ limitées/stoppées. Dans le cas de l'exemple comparatif 2, si le revêtement catalytique SCR du filtre SCRF 7' est détruit par une régénération sévère, au-delà de 1000°C, la zéolithe se dégrade et laisse passer l'ammoniac, ce qui contraint à la réduction voire à la coupure de l'injection d'ammoniac. Comme on réduit - voire on stoppe - ainsi la réduction catalytique des NOx, une alerte est envoyée au conducteur par l'intermédiaire d'un voyant qui s'allume au tableau de bord du véhicule. A contrario, dans le cas de l'exemple 1 selon l'invention, la présence de l'organe SCR 6, qui ne subit pas les régénérations thermiques d'un filtre à particules, permet de maintenir près de 80% de l'efficacité de la réduction des NOx (comme déjà souligné à l'aide du graphe de la figure 4), et permet de rester sous le seuil d'alerte du conducteur (tout en évitant des rejets d'ammoniac malodorants en bout de ligne d'échappement).

La figure 5 présente un graphe sous forme d'un histogramme représentant, à gauche, un organe SCR avec un revêtement d'imprégnation comprenant une zéolithe imprégnée au fer (Fe) et à droite, toutes choses égales par ailleurs, un même organe muni d'un revêtement d'imprégnation comprenant une zéolithe imprégnée au cuivre (Cu) (les mêmes que précédemment décrits avec l'exemple selon l'invention). En ordonnée, est représentée l'efficacité de réduction des NOx, (en %) mesurée sur des organes SCR vieillis et à basse température, i.e. à 150°C environ. Les pavés des deux histogrammes correspondent à différents ratios de NO₂/NOx en entrée de l'organe SCR, du plus foncé (le plus fort pourcentage en NO2, égal à 90%), au plus clair (correspondant à 0% de NO₂). On observe que la réduction des NOx est plus importante pour des ratios de NO₂/NOx de 50%, et que, pour un ratio de 50%, l'efficacité est plus grande pour une zéolithe échangée au fer que pour une zéolithe échangée au cuivre. On vérifie également avec ce graphe que les zéolithes au fer sont très sensibles au ratio NO₂/NOx, ce qui est nettement moins le cas des zéolithes échangées au cuivre, et que les zéolithes au fer sont globalement plus performantes à basse température que les zéolithes au cuivre, hors ratio de NO₂ inférieur à 10%.

La figure 6 illustre de façon très schématique les évolutions comparées d'émission de CO₂ et de NOx d'un moteur à la source : en abscisse est représenté le niveau de NOx des gaz d'échappement (en gramme par kilomètre parcouru du véhicule) et en ordonnée est représenté le niveau de CO₂ des gaz d'échappement (également en gramme par kilomètre parcouru de véhicule), avec, en ce qui concerne le niveau de NOx l'indication de la valeur maximale autorisée selon la norme Euro 5 et selon la norme Euro 6. On constate que plus le moteur réduit ses émissions en NOx, plus ses émissions en CO₂ augmentent. Donc, lorsque le moteur est conçu de façon à diminuer fortement les émissions de CO₂, il émet une quantité plus importante de NOx, comme illustré par cette figure 6. En ayant un système de post-traitement extrêmement efficace comme celui de l'exemple 1 selon l'invention, il est donc possible de minimiser à la source les émissions de CO₂, et donc la consommation de carburant, sans dégrader le niveau d'émission de NOx en bout de ligne d'échappement.

En conclusion, grâce au dispositif de post-traitement de l'invention, non seulement il est possible de répondre aux exigences croissantes des futures normes, notamment en ce qui concerne les niveaux d'émission de NOx, mais il est également possible de réduire la consommation de carburant en déplaçant, dans la conception et/ou le contrôle commande du moteur thermique, le compromis CO₂/NOx vers des stratégies « bas CO₂ », et on évite ou limite les rejets d'ammoniac en bout de ligne d'échappement.

## Revendications

1. Dispositif de post-traitement des gaz d'échappement d'un moteur à combustion (1) comportant, d'amont en aval :
• un organe catalyseur d'oxydation DOC (3) ;
• une embouchure (41) d'un moyen d'introduction (4) de réducteur ou de précurseur d'un réducteur pour la réduction catalytique sélective des oxydes d'azote SCR ;
• un organe catalyseur de réduction catalytique sélective des oxydes d'azote NOₓ (6) ;
**caractérisé en ce qu'**il comporte encore
• un organe filtre à particules (7) muni d'un revêtement catalyseur de réduction catalytique sélective des oxydes d'azote NOₓ SCRF ;
• lesdits organes et embouchure étant regroupés dans une enveloppe (2) unique ;
• ledit organe catalyseur de réduction catalytique sélective des oxydes d'azote (6) étant d'une longueur au moins deux fois plus petite (L1), notamment au moins 2,2 à 3 fois plus petite que la longueur (L2) du filtre à particules (7).

2. Dispositif de post-traitement selon la revendication précédente, **caractérisé en ce que** l'organe catalyseur de réduction catalytique sélective des oxydes d'azote (6) présente une longueur (L1) d'au plus 80 mm, notamment d'au plus 76 mm, de préférence comprise entre 45 et 55 mm.

3. Dispositif de post-traitement selon l'une des revendications précédentes, **caractérisé en ce que** la longueur totale (L12) de l'organe catalyseur de réduction catalytique sélective (6) des oxydes d'azote et du filtre à particules (7), y compris l'espace éventuel entre eux, est d'au plus 200 mm, notamment d'au plus 190 mm, de préférence compris entre 170 et 180 mm.

4. Dispositif de post-traitement selon l'une des revendications précédentes, **caractérisé en ce que** la longueur totale (L0) entre l'entrée de l'organe catalyseur d'oxydation (3) et la sortie du filtre à particules (7) est d'au plus 450 mm, notamment d'au plus 400 mm, de préférence comprise entre 280 et 380 mm.

5. Dispositif de post-traitement selon l'une des revendications précédentes, **caractérisé en ce que** l'organe catalyseur d'oxydation (3) comprend un matériau adsorbeur d'oxydes d'azote PNA.

6. Dispositif de post-traitement selon l'une des revendications précédentes, **caractérisé en ce que** l'organe catalyseur d'oxydation (3) présente un catalyseur dont la quantité de métaux nobles est ajustée de façon à obtenir en sortie de l'organe des gaz d'échappement dont le ratio NO₂/NOₓ est égal ou voisin de 0,5.

7. Dispositif de post-traitement selon l'une des revendications précédentes, **caractérisé en ce que** le catalyseur de l'organe catalyseur de réduction catalytique sélective (6) est à base de zéolithe(s) échangée(s) au fer.

8. Dispositif de post-traitement selon l'une des revendications précédentes, **caractérisé en ce que** le catalyseur du filtre à particules (7) est à base de zéolithe(s) échangée(s) au cuivre.

9. Dispositif de post-traitement selon l'une des revendications précédentes, **caractérisé en ce que** le support de l'organe catalyseur d'oxydation (3) et/ou celui de l'organe catalyseur de réduction catalytique sélective (6) est métallique, et optionnellement équipé(s) de moyens chauffants.

10. Dispositif de post-traitement selon l'une des revendications précédentes, **caractérisé en ce qu'**il comprend un organe mélangeur (5) pour le mélange des gaz d'échappement et du réducteur et/ou la conversion du précurseur en réducteur entre l'embouchure (41) du moyen d'introduction (4) de réducteur ou de précurseur d'un réducteur pour la réduction catalytique sélective des oxydes d'azote SCR et l'organe catalyseur de réduction catalytique sélective des oxydes d'azote (6).

## Patentansprüche

1. Abgasnachbehandlungseinrichtung einer Brennkraftmaschine (1), die von stromaufwärts nach stromabwärts Folgendes umfasst:
• ein Oxidationskatalysatorelement DOC (3);
• eine Mündung (41) eines Einführmittels (4) eines Reduktionsmittels oder Vorläufers eines Reduktionsmittels für die selektive katalytische Reduktion der Stickstoffoxide SCR;
• ein Katalysatorelement zur selektiven katalytischen Reduktion der Stickstoffoxide NOₓ (6);
**dadurch gekennzeichnet, dass** sie auch Folgendes umfasst
• ein Partikelfilterelement (7), das mit einer Katalysatorbeschichtung zur selektiven katalytischen Reduktion der Stickstoffoxide NOₓSCRF versehen ist;
• wobei die Elemente und die Mündung in einem einzigen Mantel (2) vereint sind;
• wobei das Katalysatorelement zur selektiven katalytischen Reduktion der Stickstoffoxide (6) eine Länge hat, die mindestens zweimal kleiner (L1), insbesondere mindestens 2,2 bis dreimal kleiner ist als die Länge (L2) des Partikelfilters (7).

2. Abgasnachbehandlungseinrichtung nach dem vorhergehenden Anspruch, **dadurch gekennzeichnet, dass** das Katalysatorelement zur selektiven katalytischen Reduktion der Stickstoffoxide (6) eine Länge (L1) von maximal 80 mm, insbesondere maximal 76 mm, bevorzugt zwischen 45 und 55 mm aufweist.

3. Abgasnachbehandlungseinrichtung nach einem der vorhergehenden Ansprüche, **dadurch gekennzeichnet, dass** die Gesamtlänge (L12) des Katalysatorelements zur selektiven katalytischen Reduktion (6) der Stickstoffoxide und des Partikelfilters (7), inklusive der eventuelle Raum zwischen ihnen, maximal 200 mm, insbesondere maximal 190 mm, bevorzugt zwischen 170 und 180 mm liegt.

4. Abgasnachbehandlungseinrichtung nach einem der vorhergehenden Ansprüche, **dadurch gekennzeichnet, dass** die Gesamtlänge (L0) zwischen dem Eingang des Oxidationskatalysatorelements (3) und dem Ausgang des Partikelfilters (7) maximal 450 mm beträgt, insbesondere maximal 400 mm, bevorzugt zwischen 280 und 380 mm liegt.

5. Abgasnachbehandlungseinrichtung nach einem der vorhergehenden Ansprüche, **dadurch gekennzeichnet, dass** das Oxidationskatalysatorelement (3) ein Stickstoffoxide PNA adsorbierendes Material enthält.

6. Abgasnachbehandlungseinrichtung nach einem der vorhergehenden Ansprüche, **dadurch gekennzeichnet, dass** das Oxidationskatalysatorelement (3) einen Katalysator aufweist, dessen Menge an Edelmetallen derart angepasst ist, dass am Ausgang des Elements Abgase erhalten werden, deren Verhältnis NO₂/NOₓ gleich oder nahe 0,5 ist.

7. Abgasnachbehandlungseinrichtung nach einem der vorhergehenden Ansprüche, **dadurch gekennzeichnet, dass** der Katalysator des Katalysatorelements zur selektiven katalytischen Reduktion (6) auf der Basis von Zeolith(en), die mit Eisen ausgetauscht sind, ist.

8. Abgasnachbehandlungseinrichtung nach einem der vorhergehenden Ansprüche, **dadurch gekennzeichnet, dass** der Katalysator des Partikelfilters (7) auf der Basis von Zeolith(en), die mit Kupfer ausgetauscht sind, ist.

9. Abgasnachbehandlungseinrichtung nach einem der vorhergehenden Ansprüche, **dadurch gekennzeichnet, dass** der Träger des Oxidationskatalysatorelements (3) und/oder der des Katalysatorelements zur selektiven katalytischen Reduktion (6) metallisch und optional mit Heizmitteln ausgestattet ist.

10. Abgasnachbehandlungseinrichtung nach einem der vorhergehenden Ansprüche, **dadurch gekennzeichnet, dass** sie ein Mischelement (5) für das Mischen der Abgase und des Reduktionsmittels und/oder für die Umwandlung des Vorläufers in Reduktionsmittel zwischen der Mündung (41) des Einführmittels (4) von Reduktionsmittel oder Vorläufer eines Reduktionsmittels für die selektive katalytische Reduktion der Stickstoffoxide SCR und dem Katalysatorelement zur selektiven katalytischen Reduktion der Stickstoffoxide (6) umfasst.

## Claims

1. An exhaust gas after-treatment device for an internal combustion engine (1) comprising, from the upstream end to the downstream end:
• a DOC oxidation catalyst member (3);
• a nozzle (41) of a means (4) for introducing a reducing agent or a precursor of a reducing agent for the selective catalytic reduction SCR of nitrogen oxides;
• a catalytic member for selective catalytic reduction of nitrogen oxides NOₓ (6);
**characterized in that** it further comprises
• a particle filter member (7) provided with a catalyst coating for selective catalytic reduction of nitrogen oxides NOₓSCRF;
• said members and nozzle being grouped together in a single shell (2);
• said catalyst member for selective catalytic reduction of nitrogen oxides (6) having a length (L1) at least two times shorter, in particular at least 2.2 to 3 times shorter, than the length (L2) of the particle filter (7).

2. The after-treatment device according to the preceding claim, **characterized in that** the catalyst member for selective catalytic reduction of nitrogen oxides (6) has a length (L1) of at most 80 mm, in particular of at most 76 mm, preferably comprised between 45 and 55 mm.

3. The after-treatment device according to one of the preceding claims, **characterized in that** the total length (L12) of the catalyst member for selective catalytic reduction of nitrogen oxides (6) and of the particle filter (7), including the possible space between them, is at most 200 mm, in particular at most 190 mm, preferably comprised between 170 and 180 mm.

4. The after-treatment device according to one of the preceding claims, **characterized in that** the total length (L0) between the inlet of the oxidation catalyst member (3) and the outlet of the particle filter (7) is at most 450 mm, in particular at most 400 mm, preferably comprised between 280 and 380 mm.

5. The after-treatment device according to one of the preceding claims, **characterized in that** the oxidation catalyst member (3) includes an adsorbing material of nitrogen oxides PNA.

6. The after-treatment device according to one of the preceding claims, **characterized in that** the oxidation catalyst member (3) has a catalyst, the quantity of noble metals of which is adjusted so as to obtain at the outlet of the member exhaust gases, the NO₂/NOₓ ratio of which is equal to or close to 0.5.

7. The after-treatment device according to one of the preceding claims, **characterized in that** the catalyst of the catalyst member for selective catalytic reduction (6) is based on iron-exchanged zeolite(s).

8. The after-treatment device according to one of the preceding claims, **characterized in that** the catalyst of the particle filter (7) is based on copper-exchanged zeolite(s).

9. The after-treatment device according to one of the preceding claims, **characterized in that** the support of the oxidation catalyst member (3) and/or that of the catalyst member for selective catalytic reduction (6) is metallic, and optionally equipped with heating means.

10. The after-treatment device according to one of the preceding claims, **characterized in that** it includes a mixer member (5) for the mixing of the exhaust gases and of the reducing agent and/or the conversion of the precursor into reducing agent between the nozzle (41) of the means (4) for introducing reducing agent or precursor of a reducing agent for the selective catalytic reduction SCR of nitrogen oxides and the catalyst member for selective catalytic reduction of nitrogen oxides (6).
